# EUROPEAN PATENT APPLICATION

(11) **EP 3 913 548 A1**
(43) Date of publication of application: **24.11.2021**
(21) Application number: 19910287.2
(22) Date of filing: 18.10.2019
(51) Int. Cl.: G06N 20/00, G06F 9/50

(54) **SERVER AND LEARNING SYSTEM**

(30) Priority: 15.01.2019 JP 2019004030
(71) Applicant: Sony Group Corporation, 108-0075 Tokyo (JP)
(72) Inventor: SUGANUMA, Hisahiro, Tokyo 108-0075 (JP)
(74) Representative: 2SPL Patentanwälte PartG mbB
(86) International application number: PCT/JP2019/041042
(87) International publication number: WO 2020/148959

(57) **Abstract**

A server of the present disclosure includes: a storage unit that stores multiple pieces of device information that respectively correspond to multiple devices, that are supplied respectively from the multiple devices, and that each include information about a corresponding one of the devices; a processing unit that determines, on the basis of the multiple pieces of device information, one or more devices that are to perform learning processing, out of the multiple devices; and a communication unit that instructs the one or more devices to execute the learning processing.

## Description

### Technical Field

The present disclosure relates to a server to be used in a system that performs learning processing, and a learning system including such a server.

### Background Art

Some electronic equipment performs learning processing. For example, PTL 1 discloses an apparatus that performs machine learning processing.

### Citation List

### Patent Literature

PTL 1: Japanese Unexamined Patent Application Publication No. 2018-165983

### Summary of the Invention

Meanwhile, in a case where there are multiple apparatuses that perform learning processing, it is desired that the learning processing be performed efficiently using the multiple apparatuses.

It is desirable to provide a server and a learning system that make it possible to implement efficient learning processing.

A server according to an embodiment of the present disclosure includes a storage unit, a processing unit, and a communication unit. The storage unit is configured to store multiple pieces of device information that respectively correspond to multiple devices, that are supplied respectively from the multiple devices, and that each include information about a corresponding one of the devices. The processing unit is configured to determine, on the basis of the multiple pieces of device information, one or more devices that are to perform leaning processing, out of the multiple devices. The communication unit is configured to instruct the one or more devices to execute the learning processing.

A learning system according to an embodiment of the present disclosure includes a server and multiple devices. The server includes a storage unit, a processing unit, and a communication unit. The storage unit is configured to store multiple pieces of device information that respectively correspond to the multiple devices, that are supplied respectively from the multiple devices, and that each include information about a corresponding one of the devices. The processing unit is configured to determine, on the basis of the multiple pieces of device information, one or more devices that are to perform leaning processing, out of the multiple devices. The communication unit is configured to instruct the one or more devices to execute the learning processing.

In the server and the learning system of the respective embodiments of the present disclosure, the multiple pieces of device information that respectively correspond to the multiple devices and are supplied respectively from the multiple devices are stored in the storage unit. The multiple pieces of device information each include information about a corresponding one of the devices. Then, on the basis of the multiple pieces of device information, one or more devices that are to perform the learning processing are determined out of the multiple devices and the determined one or more devices are instructed to execute the learning processing.

### Brief Description of Drawing

[FIG. 1] FIG. 1 is a configuration diagram illustrating a configuration example of a learning system according to an embodiment of the present disclosure.
[FIG. 2] FIG. 2 is a block diagram illustrating a configuration example of a server illustrated in FIG. 1.
[FIG. 3] FIG. 3 is a table illustrating a configuration example of a sensor information database illustrated in FIG. 2.
[FIG. 4] FIG. 4 is a table illustrating a configuration example of a device information database illustrated in FIG. 2.
[FIG. 5] FIG. 5 is a block diagram illustrating a configuration example of a device illustrated in FIG. 1.
[FIG. 6] FIG. 6 is a flowchart illustrating an operation example of a server according to a first embodiment.
[FIG. 7] FIG. 7 is a table illustrating an example of instruction information according to an embodiment.
[FIG. 8] FIG. 8 is a sequence diagram illustrating an operation example of a learning system according to the first embodiment.
[FIG. 9] FIG. 9 is a sequence diagram illustrating another operation example of the learning system according to the first embodiment.
[FIG. 10] FIG. 10 is a sequence diagram illustrating another operation example of the learning system according to the first embodiment.
[FIG. 11] FIG. 11 is a flowchart illustrating an operation example of a server according to a second embodiment.
[FIG. 12] FIG. 12 is a sequence diagram illustrating an operation example of a learning system according to the second embodiment.
[FIG. 13] FIG. 13 is an explanatory diagram illustrating an operation example of the learning system according to the second embodiment.
[FIG. 14] FIG. 14 is a flowchart illustrating an operation example of a server according to a third embodiment.
[FIG. 15] FIG. 15 is a table illustrating a configuration example of a path vector table illustrated in FIG. 14.
[FIG. 16] FIG. 16 is a table illustrating a configuration example of a path overlap table illustrated in FIG. 14.

### Modes for Carrying out the Invention

In the following, some embodiments of the present disclosure are described in detail with reference to the drawings. It is to be noted that the descriptions are given in the following order.
1. First Embodiment
2. Second Embodiment
3. Third Embodiment

### <1. First Embodiment>

### [Configuration Example]

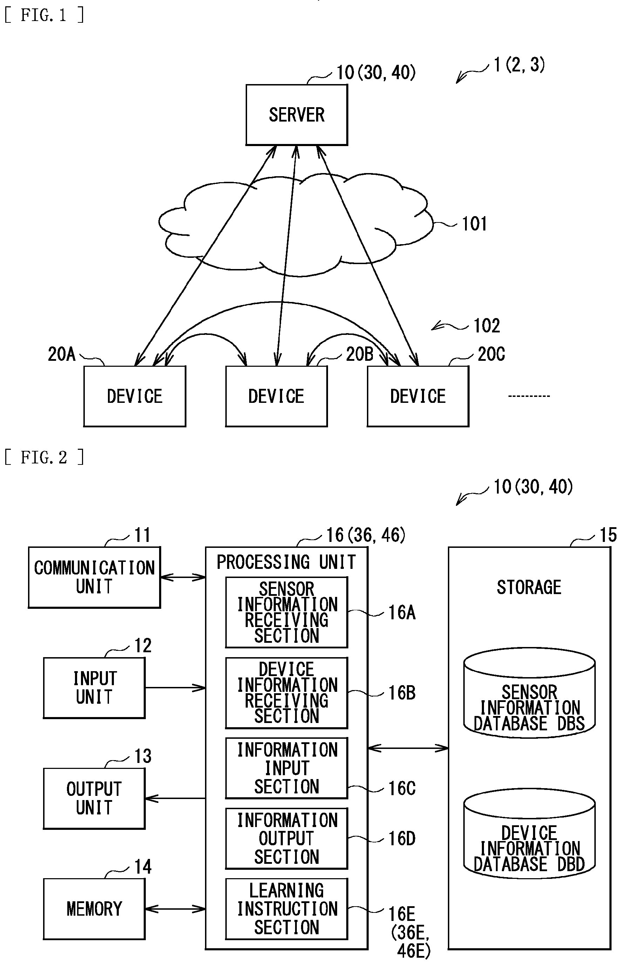

FIG. 1 illustrates a configuration example of a learning system according to an embodiment (a learning system 1). The learning system 1 includes a server 10 and multiple devices 20 (devices 20A, 20B, 20C, ...).

Each of the multiple devices 20 is a device having a communication function, and is an IoT (Internet Of Thing) device or a sensor device, for example. Such a device 20 is applied to, for example, a smartphone, a smart meter, a digital camera, a drone, a vehicle, or the like. The multiple devices 20 are coupled to the server 10 via a public telecommunication network 101, and are configured to be able to communicate with the server 10. As the public telecommunication network 101, it is possible to use, for example, 3G (3rd Generation), LTE (Long Term Evolution), LPWAN (Low Power Wide Area Network), wireless LAN (Local Area Network), or the like. Further, the multiple devices 20 are coupled to each other via, for example, a closed telecommunication network 102, and are configured to be able to communicate with each other. It is to be noted that this is non-limiting, and the multiple devices 20 may be coupled to each other via the public telecommunication network 101.

The device 20 includes, for example, multiple sensors 27 (described later), and performs machine learning processing on the basis of results of detection by the sensors 27. As the sensors 27, it is possible to use various sensors including, for example, temperature sensors, barometric pressure sensors, humidity sensors, GPS (Global Positioning System) sensors, acceleration sensors, image sensors, microphones, and the like. Further, the device 20 is able to transmit, for example, device information INFD including information about contexts, computing resources, and the like of the device 20, sensor information INFS including the results of detection by the sensors 27, and a machine learning model M obtained by the machine learning processing to the server 10. Further, the device 20 is able to transmit, for example, the sensor information INFS and the machine learning model M to another device 20. The server 10 accumulates the sensor information INFS transmitted from the multiple devices 20 in a sensor information database DBS, and accumulates the device information INFD transmitted from the multiple devices 20 in a device information database DBD. For example, the server 10 references the device information database DBD and determines one or more devices 20 that are to perform machine learning processing, out of the multiple devices 20. Then, the server 10 instructs the determined one or more devices 20 to execute the machine learning processing. This makes it possible for the learning system 1 to perform distributed machine learning efficiently.

### (Server 10)

FIG. 2 illustrates a configuration example of the server 10. The server 10 includes a communication unit 11, an input unit 12, an output unit 13, a memory 14, a storage 15, and a processing unit 16.

The communication unit 11 is configured to be able to communicate with the multiple devices 20 via the public telecommunication network 101. The communication unit 11 may perform wired communications or wireless communications. In a case of wired communications, it is possible to use, for example, a telephone line, Ethernet (registered trademark), InfiniBand, an optical line, or the like. Further, in a case of wireless communications, it is possible to use, for example, wireless LAN, 3G, LTE, Bluetooth (registered trademark), or the like. Although a single communication unit 11 is provided in this example, this is non-limiting and, for example, multiple (for example, two) communication units 11 may be provided. In this case, for example, one of the two communication units 11 may perform wired communications and the other may perform wireless communications.

The input unit 12 is configured to accept a user operation. As the input unit 12, it is possible to use, for example, a mouse, a keyboard, a touch panel, a microphone, a camera, or the like. Although a single input unit 12 is provided in this example, this is non-limiting and, for example, multiple input units 12 may be provided. The multiple input units 12 may include, for example, two or more kinds of input units among the mouse and the like described above.

The output unit 13 is configured to provide the user with information by outputting the information to the user on the basis of instructions from the processing unit 16. As the output unit 13, it is possible to use, for example, a CRT (Cathode Ray Tube), a liquid crystal display, a projector, or the like. It is to be noted that these are non-limiting, and a printer, for example, may also be used. Although a single output unit 13 is provided in this example, this is non-limiting and, for example, multiple output units 13 may be provided. In this case, the multiple output units 13 may include, for example, only one kind of output units (for example, liquid crystal displays), or may include multiple kinds of output units.

The memory 14 is configured to store data to be used when the processing unit 16 executes a program. The memory 14 is configured using a RAM (Random Access Memory), for example. Specifically, as the RAM 14, it is possible to use, for example, a DRAM (Dynamic RAM), an MRAM (Magnetoresistive RAM), an NVRAM (Non-Volatile RAM), or the like.

The storage 15 is configured to store various programs. As the storage 15, it is possible to use, for example, a hard disk, an SSD (Solid State Drive), a tape medium, or the like. The storage 15 stores the sensor information database DBS and the device information database DBD. Although a single storage 15 is provided in this example, this is non-limiting and, for example, multiple storages 15 may be provided. In this case, the multiple storages 15 may include, for example, only one kind of storages (for example, hard disks), or may include multiple kinds of storages.

The sensor information database DBS is a database in which the sensor information INFS transmitted from the multiple devices 20 is accumulated.

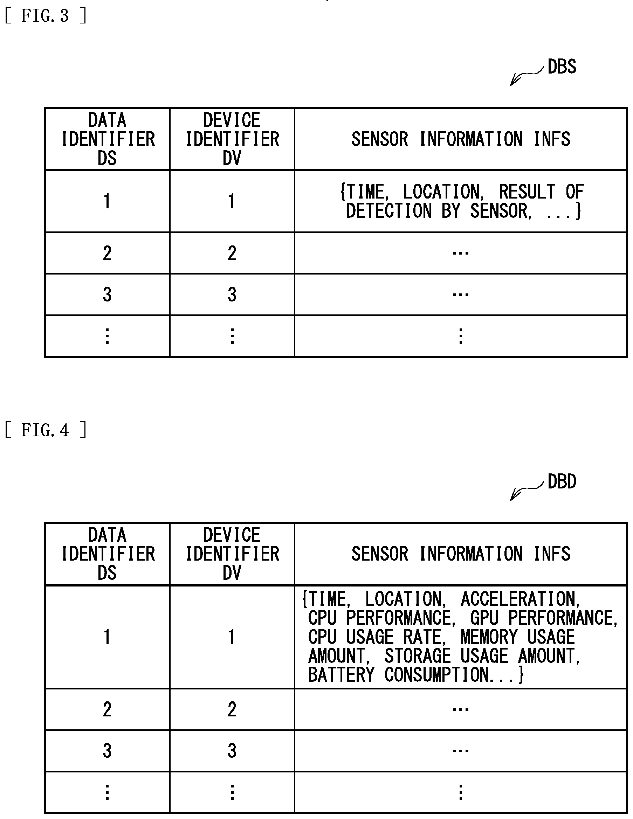

FIG. 3 illustrates a configuration example of the sensor information database DBS. In the sensor information database DBS, a data identifier DS, a device identifier DV, and the sensor information INFS are managed in association with each other. The sensor information INFS includes information about the results of detection by the sensors 27 transmitted from a certain device 20. Specifically, the sensor information INFS includes information about a time at which the sensor information INFS was transmitted, a location of the device 20 when the device 20 transmitted the sensor information INFS, the results of detection by the sensors 27 in the device 20, etc. The location of the device 20 is obtained by a GPS sensor included in the multiple sensors 27 of the device 20. The results of detection by the sensors 27 are, for example, temperature data in a case where the sensors 27 are temperature sensors, barometric pressure data in a case where the sensors 27 are barometric pressure sensors, humidity data in a case where the sensors 27 are humidity sensors, acceleration data in a case where the sensors 27 are acceleration sensors, image data such as moving image data or still image data in a case where the sensors 27 are image sensors, and voice data in a case where the sensors 27 are microphones. The device identifiers DV are codes for identifying the multiple devices 20, and are assigned respectively to the multiple devices 20. The data identifiers DS are codes for identifying the sensor information INFS stored in the sensor information database DBS. In the sensor information database DBS, the sensor information INFS, the data identifier DS assigned to the sensor information INFS, and the device identifier DV assigned to the device 20 that transmitted the sensor information INFS are managed in association with each other.

The device information database DBD is a database in which the device information INFD transmitted from the multiple devices 20 is accumulated.

FIG. 4 illustrates a configuration example of the device information database DBD. The device information database DBD is configured to include the device information INFD transmitted from the multiple devices 20. In the device information database DBD, a data identifier DD, the device identifier DV, and the device information INFD are managed in association with each other. The device information INFD is information about a certain device 20 transmitted from the device 20, and includes, in this example, information about contexts, computing resources, and the like of the device 20. Specifically, the device information INFD includes information about a time at which the device information INFD was transmitted, a location of the device 20 when the device 20 transmitted the device information INFD, an acceleration of the device 20, performance of a CPU (Central Processing Unit) of the device 20, performance of a GPU (Graphics Processing Unit) of the device 20, a CPU usage rate of the device 20, a memory usage amount of the device 20, a storage usage amount of the device 20, a battery consumption of the device 20, etc. The location of the device 20 is obtained by a GPS sensor included in the multiple sensors 27 of the device 20. The acceleration of the device 20 is obtained by an acceleration sensor included in the multiple sensors 27 of the device 20. The data identifiers DD are codes for identifying the device information INFD stored in the device information database DBD. In the device information database DBD, the device information INFD, the data identifier DD assigned to the device information INFD, and the device identifier DV assigned to the device 20 that transmitted the device information INFD are managed in association with each other.

The processing unit 16 is configured to control the operation of the server 10 and to perform various processing. The processing unit 16 is configured using, for example, a CPU, a DSP (Digital Signal Processor), an FPGA (Field Programmable Gate Array), and the like. The processing unit 16 may include two or more of these CPU and the like, for example. Further, the processing unit 16 may include a GPU, for example. The processing unit 16 includes a sensor information receiving section 16A, a device information receiving section 16B, an information input section 16C, an information output section 16D, and a learning instruction section 16E.

The sensor information receiving section 16A is configured to receive the sensor information INFS supplied via the communication unit 11 from the device 20, and to populate the sensor information database DBS with the sensor information INFS in association with the device identifier DV of the device 20 that has transmitted the sensor information INFS.

The device information receiving section 16B is configured to receive the device information INFD supplied via the communication unit 11 from the device 20, and to populate the device information database DBD with the device information INFD in association with the device identifier DV of the device 20 that has transmitted the device information INFD.

The information input section 16C is configured to receive information of which the user instructs by operating the input unit 12.

The information output section 16D is configured to supply the output unit 13 with information to be outputted by the output unit 13.

The learning instruction section 16E is configured to instruct the device 20 to start the machine learning processing on the basis of instructions from the information input section 16C having received the instructions from the user, for example. The learning instruction section 16E references, for example, the device information database DBD and determines one or more devices 20 that are to perform the machine learning processing, out of the multiple devices 20. Further, the learning instruction section 16E is configured to, for example, in a case of causing the one or more devices 20 to perform the machine learning processing on the basis of the sensor information INFS included in the sensor information database DBS, select the sensor information INFS to be transmitted to the one or more devices 20 from the sensor information database DBS.

### (Device 20)

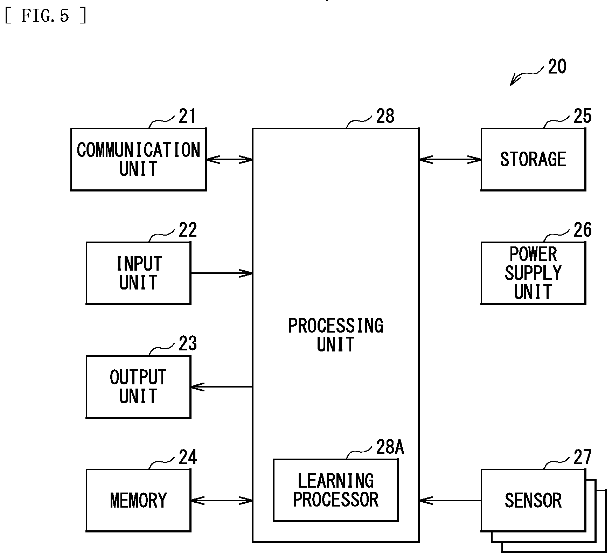

FIG. 5 illustrates a configuration example of the device 20. The device 20 includes a communication unit 21, an input unit 22, an output unit 23, a memory 24, a storage 25, a power supply unit 26, the multiple sensors 27, and a processing unit 28.

The communication unit 21 is configured to be able to communicate with the server 10 via the public telecommunication network 101 and to be able to communicate with other devices 20 via the closed telecommunication network 102. The communication unit 21 may perform wired communications or wireless communications. In the case of wired communications, it is possible to use, for example, a telephone line, Ethernet, InfiniBand, an optical line, or the like. Further, in the case of wireless communications, it is possible to use, for example, wireless LAN, 3G, LTE, LPWA, Bluetooth, or the like. Although a single communication unit 21 is provided in this example, this is non-limiting and, for example, multiple (for example, two) communication units 21 may be provided. In this case, one of the two communication units 21 may perform wired communications and the other may perform wireless communications.

The input unit 22 is configured to accept a user operation. Specifically, the input unit 22 accepts a power-on/off operation, a command execution operation, and the like by the user. As the input unit 22, it is possible to use, for example, a switch, a keyboard, a mouse, a touch panel, a microphone, a camera, or the like. Although a single input unit 22 is provided in this example, this is non-limiting and, for example, the input unit 22 may not be provided.

The output unit 23 is configured to provide the user with information by outputting the information to the user on the basis of instructions from the processing unit 28. Specifically, the output unit 23 is able to display, for example, a state of the device 20 such as CPU resources or the remaining battery capacity, and the results of detection by the multiple sensors 27 (for example, temperature data, humidity data, and the like). As the output unit 23, it is possible to use, for example, a liquid crystal display, an indicator such as an LED (Light Emitting Diode), a meter needle, a speaker, or the like. Although a single output unit 23 is provided in this example, this is non-limiting and, for example, the output unit 23 may not be provided.

The memory 24 is configured to store data to be used when the processing unit 28 executes a program, the results of detection by the multiple sensors 27, the machine learning model M, etc. The memory 24 is configured using a RAM, for example.

The storage 25 is configured to store various programs. As the storage 25, it is possible to use, for example, a flash memory, an SSD, a ROM (Read Only Memory), a hard disk, or the like. Although a single storage 25 is provided in this example, this is non-limiting and, for example, multiple storages 25 may be provided. In this case, the multiple storages 25 may include, for example, only one kind of storages (for example, flash memories), or may include multiple kinds of storages.

The power supply unit 26 is configured to supply power to the device 20. The power supply unit 26, in this example, the power supply unit 26 includes a battery. It is to be noted that this is non-limiting and, the power supply unit 26 may include an AC/DC converter for converting, for example, an alternating current power supply signal supplied from a commercial power source to a direct current power supply signal. Further, the power supply unit 26 may have a function of generating power. Specifically, the power supply unit 26 is able to generate power by, for example, sunlight, radio waves, vibrations, heat (temperature difference), or pressure. Although a single power supply unit 26 is provided in this example, this is non-limiting and, for example, multiple power supply units 26 may be provided. In this case, the power supply units 26 may include only one kind of power supply units (for example, batteries), or may include multiple kinds of power supply units.

As the multiple sensors 27, it is possible to use, for example, temperature sensors, barometric pressure sensors, humidity sensors, GPS sensors, acceleration sensors, image sensors, microphones, and the like. The device 20 stores the results of detection by the sensors 27 in the memory 24. Then, the device 20 transmits the sensor information INFS including the results of detection by the sensors 27 to the server 10 or another device 20.

The processing unit 28 is configured to control the operation of the device 20 and to perform various processing. The processing unit 28 is configured using, for example, a CPU, an ASIC (Application Specific Integrated Circuit), an FPGA, or the like. The processing unit 28 may include two or more of these CPU and the like, for example. Further, the processing unit 28 may include a GPU, for example.

The processing unit 28 includes a learning processor 28A. The learning processor 28A is configured to generate the machine learning model M by performing the machine learning processing on the basis of learning instructions from the server 10. The learning processor 28A performs the machine learning processing using, for example, the results of detection by the sensors 27 and the sensor information INFS supplied from the server 10 or another device 20.

Here, the storage 15 corresponds to a specific example of a "storage unit" in the present disclosure. The device information INFD corresponds to a specific example of "device information" in the present disclosure. The processing unit 16 corresponds to a specific example of a "processing unit" in the present disclosure. The communication unit 11 corresponds to a specific example of a "communication unit" in the present disclosure. The multiple devices 20 correspond to a specific example of "multiple devices" in the present disclosure. The machine learning model M corresponds to a specific example of "learning model information" in the present disclosure.

### [Operation and Workings]

Next, the operation and workings of the learning system 1 of the present embodiment will be described.

### (Outline of Overall Operation)

First, an outline of an overall operation of the learning system 1 will be described with reference to FIG. 1. The device 20 transmits the device information INFD including information about the contexts, computing resources, and the like of the device 20 to the server 10. Further, the device 20 transmits the sensor information INFS including the results of detection by the sensors 27 to the server 10.

The server 10 populates the device information database DBD with the device information INFD transmitted from the multiple devices 20 in association with the device identifiers DV of the devices 20 that have transmitted the device information INFD. Further, the server 10 populates the sensor information database DBD with the sensor information INFS transmitted from the multiple devices 20 in association with the device identifiers DV of the devices 20 that have transmitted the sensor information INFS.

On the basis of, for example, instructions by the user who has operated the input unit 12, the server 10 references the device information database DBD and determines one or more devices 20 that are to perform the machine learning processing, out of the multiple devices 20. Then, the server 10 instructs the determined one or more devices 20 to execute the machine learning processing.

### (Detailed Operation)

In the following, a case where the learning system 1 is applied to a system that monitors pedestrians, a lost child, and the like by using a shot image will be described as an example. In this example, the multiple sensors 27 includes an image sensor (an image sensor 27A), and the device 20 performs machine learning processing on the basis of the results of detection by the image sensor 27A. In this system, one or more devices 20 are caused to perform the machine learning processing on the basis of, for example, an image of a lost child and to generate a machine learning model M. Then, the multiple devices 20 use this machine learning model M to perform tracking of the lost child. This example will be described in detail below.

The image sensor 27A of the device 20 generates image data by continuing to perform, for example, a shooting operation. The device 20 stores the image data in the storage 25. Further, the processing unit 28 of the device 20 generates sensor information INFS on the basis of the image data, and the communication unit 21 transmits the sensor information INFS to the server 10. The communication unit 11 of the server 10 receives the sensor information INFS, and the sensor information receiving section 16A of the processing unit 16 populates the sensor information database DBS with the sensor information INFS in association with the device identifier DV of the device 20 that has transmitted the sensor information INFS. In this manner, the sensor information database DBS of the server 10 is populated with the image data (the sensor information INFS) transmitted from the multiple devices 20.

Further, the processing unit 28 of the device 20 generates device information INFD including information about the contexts, computing resources, and the like of the device 20, and the communication unit 21 intermittently transmits the device information INFD to the server 10. The communication unit 11 of the server 10 receives the device information INFD, and the device information receiving section 16B of the processing unit 16 populates the device information database DBD with the device information INFD in association with the device identifier DV of the device 20 that has transmitted the device information INFD. In this way, the device information database DBD of the server 10 is populated with the information about the contexts, computing resources, and the like (the device information INFD) transmitted from the multiple devices 20.

The output unit 13 of the server 10 displays, for example, information such as the image data included in the sensor information database DBS and information about the contexts, computing resources, and the like included in the device information database DBD on the basis of a user operation accepted by the input unit 12 of the server 10. For example, the output unit 13 of the server 10 is able to simultaneously display multiple images shot by the multiple devices 20.

For example, a supervisor monitors people while viewing the information displayed on the output unit 13 of the server 10. Then, for example, in a case where the supervisor has noticed a lost child, the supervisor operates the input unit 12 to instruct one or more devices 20 out of the multiple devices 20 to perform machine learning processing on the basis of an image of the lost child. For example, the supervisor may select one or more devices 20 that are to perform the machine learning processing by operating the inputting unit 12, or the learning instruction section 16E may select one or more devices 20 that are to perform the machine learning processing, as described below. Then, the learning instruction section 16E generates instruction information MSG instructing to perform the machine learning processing, and the communication unit 11 transmits the instruction information MSG to the one or more devices 20 that are to perform the machine learning processing.

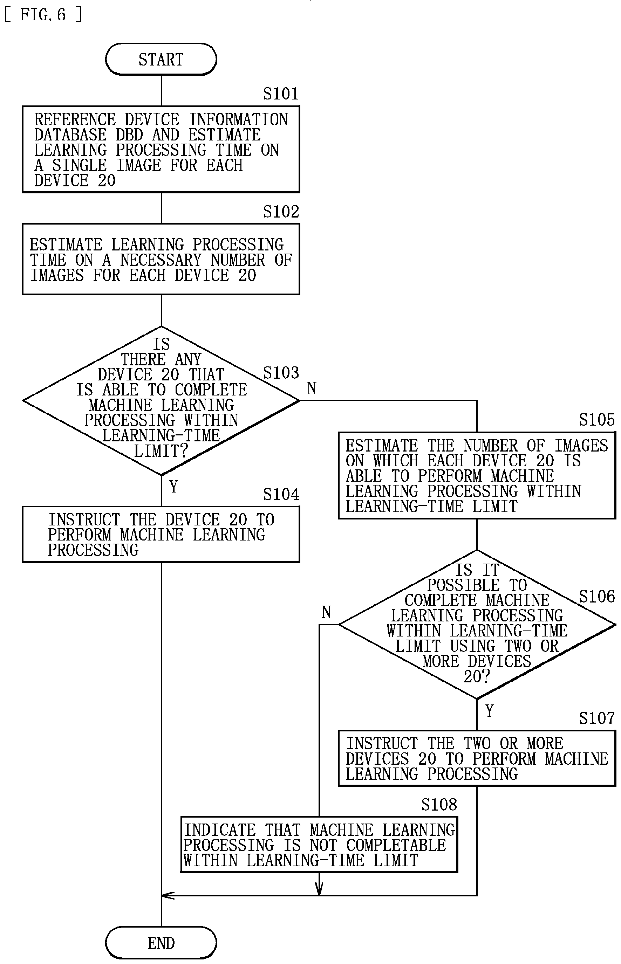

FIG. 6 illustrates an operation example of the learning instruction section 16E of the server 10. The learning instruction section 16E determines in advance, by machine learning processing, the number of images necessary for obtaining a machine learning model M that is accurate to some degree (a necessary number). Further, the learning instruction section 16E determines in advance, by machine learning processing, for example, within how much time the machine learning model M is to be generated (a learning-time limit). On the basis of the necessary number and the learning-time limit, the learning instruction section 16E instructs the one or more devices 20, out of the multiple devices 20, to perform the machine learning processing as described below.

First, the learning instruction section 16E references the device information database DBD and estimates a learning processing time on a single image for each of the devices 20 (step SI01). Specifically, the learning instruction section 16E estimates the learning processing time on a single image for each of the devices 20 on the basis of a computation amount of the machine learning model M and the CPU performance, the CPU usage rate, the memory usage amount, and the like of each of the devices 20 included in the device information database DBD. As the units of the computation amount of the machine learning model M, it is possible to use a sum-of-product computation amount, FLOPS (Floating-point Operations Per Second), or the like. For example, for the device 20 having sufficient computing resources, the learning processing time is shorter, and for the device 20 having less computing resources, the learning processing time is longer.

Next, the learning instruction section 16E estimates a learning processing time on the necessary number of images for each of the devices 20 on the basis of the learning processing time on a single image for each of the devices 20 estimated in step S101 (step S102).

Next, the learning instruction section 16E checks whether or not the multiple devices 20 include any device 20 that is able to complete the machine learning processing within the learning-time limit (step SI03).

In step S103, in a case where there is a device 20 that is able to complete the machine learning processing within the learning-time limit ("Y" in step S103), the server 10 instructs the device 20 to perform the machine learning processing (step S104). Specifically, the learning instruction section 16E generates instruction information MSG instructing to perform the machine learning processing, and the communication unit 11 transmits the instruction information MSG to the device 20. For example, in a case where there are two or more such devices 20, the server 10 selects one of such two or more devices 20 and instructs the selected one device 20 to perform the machine learning processing.

In step S103, in a case where there is no device 20 that is able to complete the machine learning processing within the learning-time limit ("N" in step S103), the learning instruction section 16E estimates the number of images on which each of the devices 20 is able to perform the machine learning processing within the learning-time limit (step SI05).

Next, on the basis of the estimation results in step S105, the learning instruction section 16E checks whether or not it is possible to complete the machine learning processing using two or more devices 20 out of the multiple devices 20 (step S106). Specifically, for example, the learning instruction section 16E examines combinations of two or more devices 20 out of the multiple devices 20 using an algorithm such as a greedy algorithm to thereby check whether or not it is possible to complete the machine learning processing using two or more devices 20.

In step S106, in a case where it is possible to complete the machine learning processing using two or more devices 20 ("Y" in step S106), the server 10 instructs the two or more devices 20 to perform the machine learning processing (step S107). Specifically, the learning instruction section 16E generates instruction information MSG instructing to perform the machine learning processing, and the communication unit 11 transmits the instruction information MSG to the two or more devices 20.

In step S106, in a case where the machine learning processing is not completable using two or more devices 20 ("N" in step S106), the output unit 13 indicates that the machine learning processing is not completable within the learning-time limit (step S108). This allows an administrator to recognize that the machine learning processing is not completable within the learning-time limit.

The flow thus ends.

In this example, one or more devices 20 to perform the machine learning processing are determined on the basis of the learning-time limit and the necessary number; however, this is non-limiting. For example, battery consumption may be considered further. Specifically, for example, the learning instruction section 16E may execute the processing described in FIG. 6 for any device 20 having the remaining battery capacity higher than or equal to a predetermined capacity among the multiple devices 20.

Further, for example, the number of tracking targets may be considered. That is, for example, as the number of children targeted for tracking increases, the number of images necessary for the machine learning processing (the necessary number) increases. It is possible for the learning instruction section 16E to take the necessary number into consideration to determine one or more devices 20 to perform the machine learning processing.

Further, for example, a moving speed of the tracking target may be considered. The server 10 is able to estimate the moving speed of the tracking target on the basis of the image data transmitted from the device 20. On the basis of the moving speed, the server 10 is able to estimate a time until the tracking target goes out of the shooting range of the image sensor 27A of the device 20. It is possible for the learning instruction section 16E to use the time estimated in this manner as the learning-time limit to thereby determine one or more devices 20 to perform the machine learning processing.

Next, a detailed description will be given of the instruction information MSG instructing the device 20 to perform the machine learning processing.

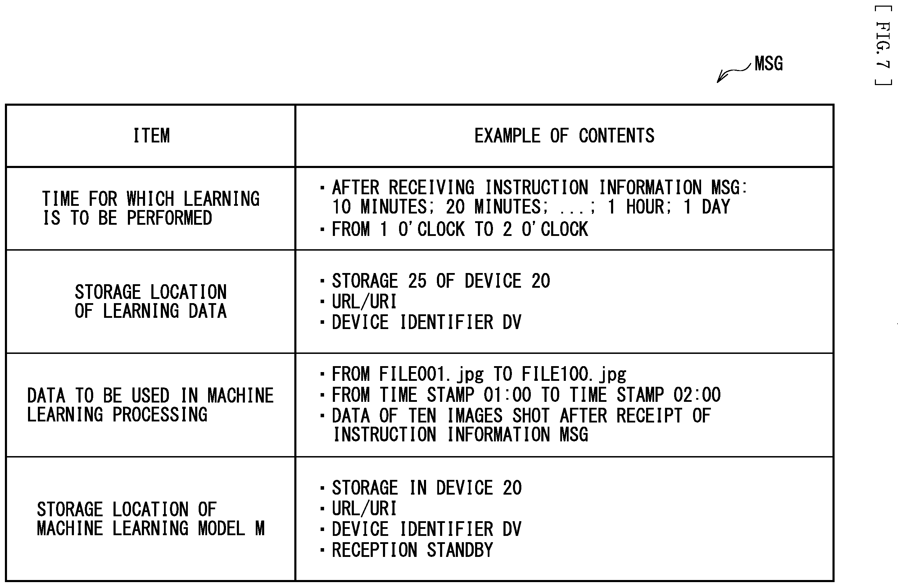

FIG. 7 illustrates an example of the instruction information MSG. The instruction information MSG includes, for example, information about "time for which learning is to be performed", "storage location of learning data", "data to be used in machine learning processing", and "storage location of machine learning model M".

The "time for which learning is to be performed" is information instructing about a time for which the machine learning processing is to be performed. The "time for which learning is to be performed" is settable, for example, to a predetermined time after the device 20 receives the instruction information MSG. The predetermined time is settable, for example, to 10 minutes, 20 minutes, ..., 1 hour, 1 day, etc. Further, the "time for which learning is to be performed" may be set using a specific time, for example. For example, it is possible to set to "from 1 o'clock to 2 o'clock".

The "storage location of learning data" is information instructing about the location of learning data (in this example, image data) that is usable in the machine learning processing. The "storage location of learning data" is settable, for example, to the storage 25 of the device 20. In this case, it is possible for the learning processor 28A of the device 20 to perform the machine learning processing on the basis of the image data stored in the storage 25, for example. Further, the "storage location of learning data" is settable, for example, to a URL (Uniform Resource Locator)/URI (Uniform Resource Identifier). In this case, the learning processor 28A is able to acquire image data by accessing a server (not illustrated) or the like in a network on the basis of the URL/URI, for example, and to perform the machine learning processing on the basis of the image data. Further, the "storage location of learning data" is settable to, for example, the device identifier DV of a certain device 20. In this case, it is possible for the learning processor 28A to perform the machine learning processing on the basis of the image data stored in the device 20 to which the device identifier DV is assigned, for example.

The "data to be used in machine learning processing" is data to be actually used in the machine learning processing. For example, in a case of still image data, it is possible to specify the "data to be used in machine learning processing" by using a file name of the still image data. Specifically, it is possible to use multiple file names such as "from file001.jpg to file100.jpg". In this case, it is possible for the learning processor 28A of the device 20 to perform the machine learning processing on the basis of multiple files that are set. Further, in a case of moving image data, for example, it is possible to specify the "data to be used in machine learning processing" by a start time (e.g., 01:00) and an ending time (e.g., 02:00) using a time stamp. In this case, it is possible for the learning processor 28A to perform the machine learning processing on the basis of data in a period from the "start time" to the "ending time". Further, for example, the "data to be used in machine learning processing" is settable to image data of multiple (for example, ten) images shot after the instruction information MSG is received. In this case, the image sensor 27A of the device 20 performs shooting ten times after the device 20 receives the instruction information MSG, and the learning processor 28A is able to perform the machine learning processing on the basis of the ten pieces of image data obtained by the shooting.

The "storage location of machine learning model M" is to be set, for example, in a case of updating an already generated machine learning model M by performing machine learning processing using that machine learning model M, and is information instructing about the location of the already generated machine learning model M. The "storage location of machine learning model M" is settable, for example, to the storage 25 of the device 20. In this case, it is possible for the learning processor 28A of the device 20 to perform the machine learning processing on the basis of the machine learning model M stored in the storage 25, for example. Further, the "storage location of machine learning model M" is settable to a URL/URI, for example. In this case, it is possible for the learning processor 28A to acquire the machine learning model M by accessing a server (not illustrated) or the like in a network on the basis of the URL/URI, for example, and to perform the machine learning processing on the basis of the machine learning model M. Further, the "storage location of machine learning model M" is settable, for example, to the device identifier DV of a certain device 20. In this case, it is possible for the learning processor 28A to perform the machine learning processing on the basis of the machine learning model M stored in the device 20 to which the device identifier DV is assigned, for example. Further, the "storage location of machine learning model M" is settable, for example, to "reception standby". In this case, the device 20 waits until the machine learning model M is later transmitted from the server 10. Accordingly, it is possible for the learning processor 28A to perform the machine learning processing on the basis of the machine learning model M transmitted from the server 10.

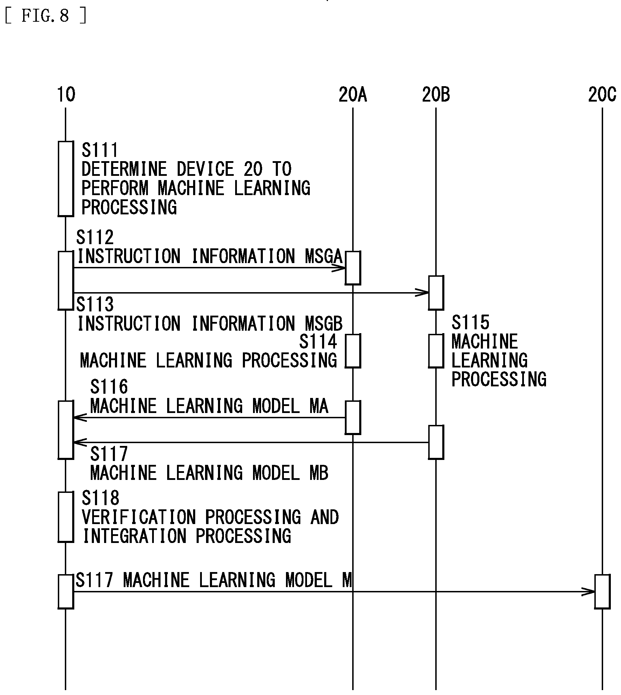

FIG. 8 illustrates an operation example of the learning system 1 in a case where two devices 20 (devices 20A and 20B) to perform the machine learning processing have been determined.

By performing the processing described in FIG. 6, for example, the learning instruction section 16E of the server 10 determines one or more devices 20 that are to perform the machine learning processing (step S111). In this example, the learning instruction section 16E determines the two devices 20A and 20B as the devices 20 to perform the machine learning processing.

Next, the learning instruction section 16E of the server 10 generates instruction information MSG (instruction information MSGA), and the communication unit 11 transmits the instruction information MSGA to the device 20A (step S112). Similarly, the learning instruction section 16E of the server 10 generates instruction information MSG (instruction information MSGB), and the communication unit 11 transmits the instruction information MSGB to the device 20B (step S113). The communication unit 21 of the device 20A receives the instruction information MSGA, and similarly, the communication unit 21 of the device 20B receives the instruction information MSGB.

Next, the learning processor 28A of the device 20A prepares learning data and a machine learning model M on the basis of the instruction information MSGA, and performs machine learning processing on the basis of the learning data and the machine learning model M (step S114). Then, the learning processor 28A generates a machine learning model MA by updating the machine learning model M on the basis of processing results of the machine learning processing. Similarly, the learning processor 28A of the device 20B prepares learning data and a machine learning model M on the basis of the instruction information MSGB, and performs machine learning processing on the basis of the learning data and the machine learning model M (step S115). Then, the learning processor 28A of the device 20B generates a machine learning model MB by updating the machine learning model M on the basis of processing results of the machine learning processing.

Next, the communication unit 21 of the device 20A transmits the generated machine learning model MA to the server 10 (step S116). Similarly, the communication unit 21 of the device 20B transmits the generated machine learning model MB to the server 10 (step SI17). The communication unit 11 of the server 10 receives the machine learning models MA and MB

Next, the learning instruction section 16E of the server 10 verifies whether or not the machine learning processing is successful on the basis of the machine learning models MA and MB, and in a case where the machine learning processing is successful, the learning instruction section 16E integrates the machine learning models MA and MB to thereby generate a machine learning model M (step S118).

Then, the communication unit 11 of the server 10 transmits the integrated machine learning model M generated in step S118 to another device 20 (a device 20C) (step S119). The communication unit 21 of the device 20C receives the machine learning model M.

This sequence thus ends.

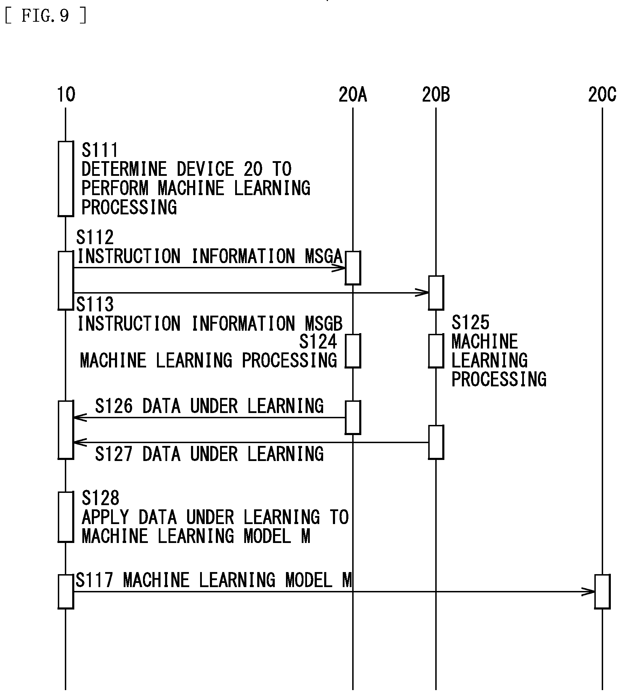

In this example, the devices 20A and 20B generate the machine learning models MA and MB in steps S114 and S115, and transmit the generated machine learning models MA and MB to the server 10; however, this is non-limiting. Instead of this, as illustrated in FIG. 9, the device 20A may transmit data under learning in the machine learning processing (i.e., step S124) to the server 10 (step S126), and the device 20B may transmit data under learning in the machine learning processing (i.e., step S125) to the server 10 (step S127). In this case, the server 10 may apply the data under learning transmitted from the devices 20A and 20B to, for example, a machine learning model M possessed by itself to thereby update the machine learning model M. Here, the data under learning in the machine learning processing corresponds to a specific example of "learning model information" in the present disclosure.

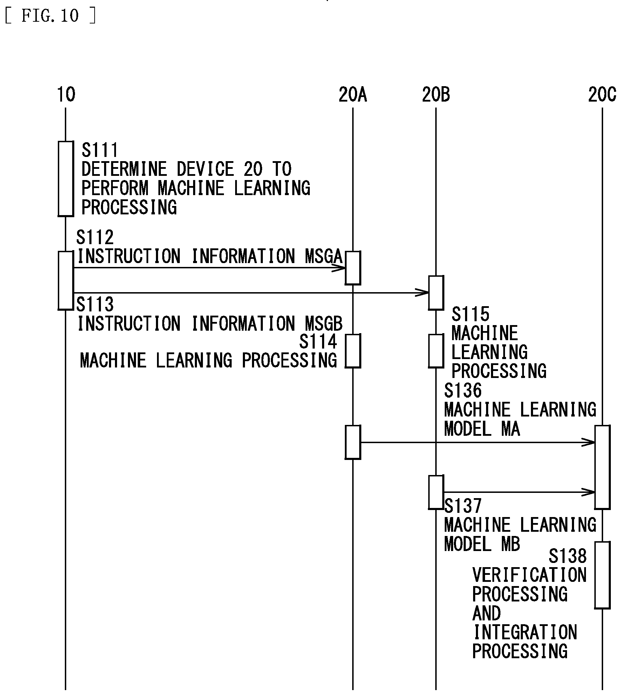

Further, in this example, the devices 20A and 20B transmit the machine learning models MA and MB to the server 10, and the server 10 integrates the machine learning models MA and MB and transmits the integrated machine learning model M to the device 20C; however, this is non-limiting. Instead of this, as illustrated in FIG. 10, the device 20A may transmit the machine learning model MA to the device 20C (step S136), and the device 20B may transmit the machine learning model MB to the device 20C (step S137). The learning processor 28A of the device 20C may verify whether or not the machine learning processing is successful on the basis of the machine learning models MA and MB, and may integrate the machine learning models MA and MB to thereby generate a machine learning model M (step S138) in a case where the machine learning processing is successful. Further, similarly to the example of FIG. 9, the device 20A may transmit data under learning in the machine learning processing to the device 20C, the device 20B may transmit data under learning in the machine learning processing to the device 20C, and the device 20C may apply the data under learning transmitted from the devices 20A and 20B to, for example, a machine learning model M possessed by itself to thereby update the machine learning model M.

In this way, in the learning system 1, one or more devices 20 to perform machine learning processing are determined on the basis of the device information database DBD. This makes it possible for the learning system 1 to determine one or more devices 20 to perform the machine learning processing on the basis of, for example, the contexts and computing resources of the multiple devices 20. As a result, it is possible for the learning system 1 to allow, for example, any device 20 having sufficient computing resources to perform the machine learning processing. This makes it possible to perform distributed machine learning efficiently.

Further, in the learning system 1, the learning-time limit and the necessary number are set and one or more devices 20 to perform the machine learning processing are so determined as to satisfy the conditions of the learning-time limit and the necessary number. This makes it possible for the learning system 1 to allow, for example, a minimum number of devices 20 out of the multiple devices 20 to perform the machine learning processing, thus making it possible to perform distributed machine learning efficiently.

Further, in the learning system 1, the device 20 performs the machine learning processing on the basis of instructions from the server 10. This makes it possible to perform the machine learning processing in a timely manner, thus making it possible to enhance the accuracy of the machine learning model M efficiently.

That is, as a method of performing distributed machine learning, for example, a method is conceivable in which multiple computers and servers are coupled to each other via a network, and machine learning processing is performed in parallel on the basis of data accumulated in the entire system to thereby obtain a machine learning model. This method is suitable for the learning of a steady or periodic phenomenon, but is not suitable for the learning of a temporary phenomenon because of its low immediacy, for example. In contrast, in the learning system 1 according to the present embodiment, the device 20 performs machine learning processing on the basis of instructions from the server 10. Accordingly, it is possible to learn a temporary phenomenon in a timely manner on the basis of the instructions from the server 10. This makes it possible for the learning system 1 to enhance the accuracy of the machine learning model M efficiently.

Further, in the learning system 1, the learning-time limit is set and one or more devices 20 to perform the machine learning processing are so determined as to satisfy the conditions of the learning-time limit. As a result, even in a case where, for example, a person to be monitored is moving, it is possible to perform the machine learning processing in a short time by setting the learning-time limit to the short time during which the person would be within the shot image. Then, in the learning system 1, immediately after that, for example, it is possible to start tracking without any delay by using an image shot by another device 20. This makes it possible for the learning system 1 to perform the machine learning processing efficiently even in the case where a target of detection by the sensor moves.

### [Effects]

As described above, according to the present embodiment, one or more devices to perform machine learning processing are determined on the basis of the device information database. This makes it possible to perform distributed machine learning efficiently.

### <2. Second Embodiment

Next, a learning system 2 according to a second embodiment will be described. In the present embodiment, the device 20 to perform machine learning processing is determined by clustering the multiple devices 20 on the basis of locations of the devices 20. It is to be noted that the components substantially the same as those of the learning system 1 according to the first embodiment described above are denoted by the same reference signs, and descriptions thereof are omitted as appropriate.

The learning system 2 includes a server 30, as illustrated in FIG. 1. The server 30 includes a processing unit 36, as illustrated in FIG. 2. The processing unit 36 includes a learning instruction section 36E. The learning instruction section 36E performs clustering of the multiple devices 20 on the basis of information about the locations of the devices 20 that is included in the device information database DBD, and thereby determines one or more devices 20 that are to perform the machine learning processing.

In the following, a description will be given of a case where the learning system 2 is applied to a system that monitors weather information including temperature and humidity in a farm, as an example. In this system, the device 20 is installed at any of various locations in the farm. The multiple sensors 27 of the device 20 include a temperature sensor, a humidity sensor, and the like. The device 20 performs machine learning processing on the basis of the results of detection by these sensors 27.

The processing unit 28 of the device 20 generates sensor information INFS on the basis of the results of detection by the temperature sensor, the humidity sensor, and the like, and the communication unit 21 transmits the sensor information INFS to the server 30. The communication unit 11 of the server 30 receives the sensor information INFS, and the sensor information receiving section 16A of the processing unit 36 populates the sensor information database DBS with the sensor information INFS in association with the device identifier DV of the device 20 that has transmitted the sensor information INFS. In this manner, the sensor information database DBS of the server 30 is populated with the results of detection by the sensors 27 (the sensor information INFS) transmitted from the multiple devices 20.

Further, the processing unit 28 of the device 20 generates device information INFD including information about the contexts, computing resources, and the like of the device 20, and the communication unit 21 intermittently transmits the device information INFD to the server 30. The communication unit 11 of the server 30 receives the device information INFD, and the device information receiving section 16B of the processing unit 36 populates the device information database DBD with the device information INFD in association with the device identifier DV of the device 20 that has transmitted the device information INFD. In this way, the device information database DBD of the server 30 is populated with the information about the context, computing resources, and the like (the device information INFD) transmitted from the multiple devices 20.

The output unit 13 of the server 30 displays, for example, the information including temperature, humidity, and the like included in the sensor information database DBS and the information about the contexts, computing resources, and the like included in the device information database DBD on the basis of a user operation accepted by the input unit 12 of the server 30.

For example, on the basis of instructions from a supervisor or in a case where a condition defined in the server 30 is satisfied, the server 30 gives instructions to cause one or more devices 20 out of the multiple devices 20 to perform machine learning processing. The learning instruction section 36E determines the one or more devices 20 to perform the machine learning processing by clustering the multiple devices 20 on the basis of the information about the locations of the devices 20 included in the device information database DBD. The learning instruction section 36E generates instruction information MSG instructing to perform the machine learning processing. As illustrated in FIG. 7, the instruction information MSG includes information about the learning data and information about the machine learning model M to be used. Then, the communication unit 11 transmits the instruction information MSG to the one or more devices 20 that are to perform the machine learning processing.

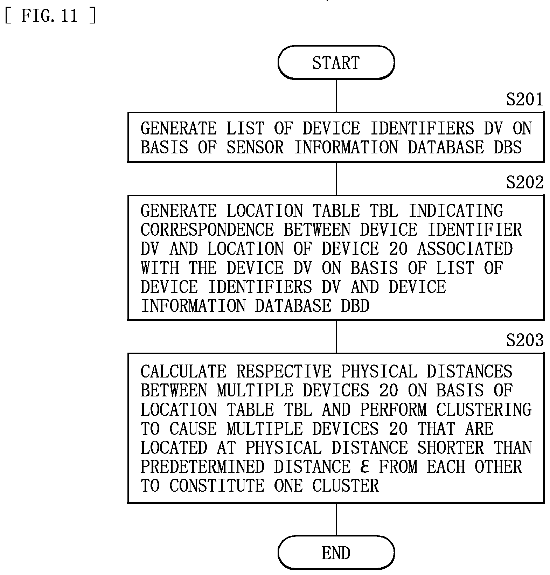

FIG. 11 illustrates an operation example of the learning instruction section 36E of the server 30.

First, the learning instruction section 36E references the sensor information database DBS and generates a list of the device identifiers DV (step S201).

Next, the learning instruction section 36E generates a location table TBL indicating correspondence between the device identifier DV and the location of the device 20 associated with the device identifier DV on the basis of the list of the device identifiers DV generated in step S201 and the device information database DBD (step S202).

Then, the learning instruction section 36E calculates respective physical distances between the multiple devices 20 on the basis of the location table TBL generated in step S202, and performs clustering to cause multiple devices 20 that are located at a physical distance shorter than a predetermined distance ε from each other to constitute one cluster (step S203). Specifically, for example, in a case where the physical distance between the location of one device 20 (a device 20X) and the location of another device 20 (a device 20Y) is shorter than the predetermined distance ε, the learning instruction section 36E performs clustering to cause these devices 20X and 20Y to constitute the same one cluster.

This flow thus ends. As a result, all the devices 20 each belong to any one of multiple clusters.

On the basis of the results of detection by the sensors 27 in the same time frame in multiple devices 20 that belong to the same cluster, the server 30 causes those multiple devices 20 belonging to the cluster to perform machine learning processing. The server 30 determines respective learning data to be supplied to those multiple devices 20 belonging to the cluster and transmits instruction information MSG to those multiple devices 20 belonging to the cluster.

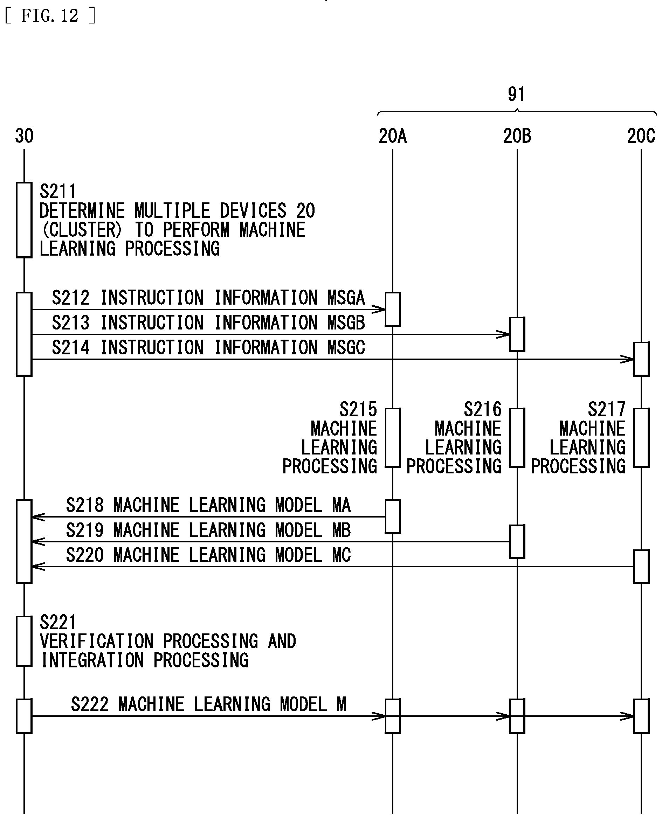

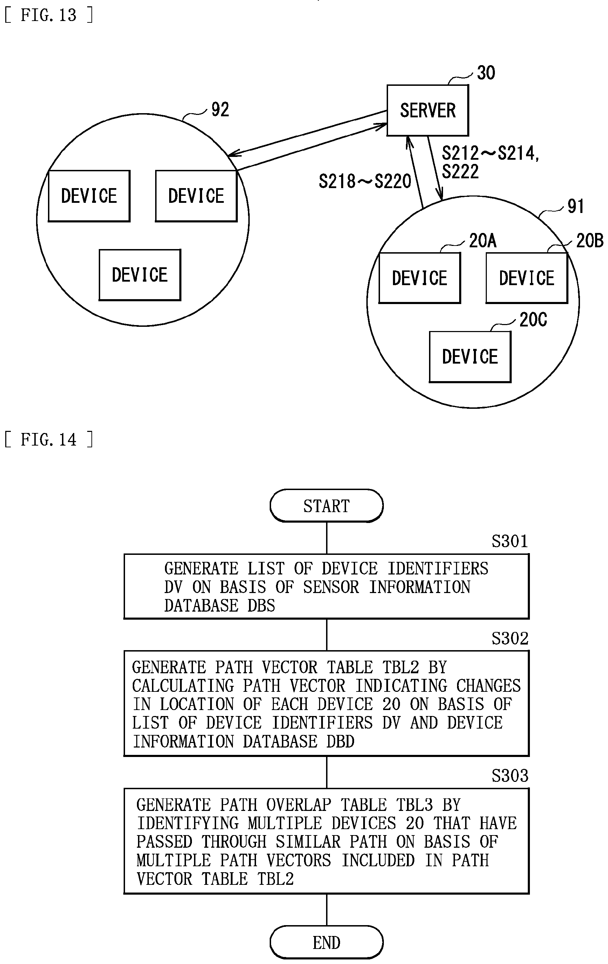

FIG. 12 illustrates an operation example of the learning system 2 in a case where multiple devices 20 (devices 20A to 20C) to perform the machine learning processing have been determined. FIG. 13 illustrates an operation example of the learning system 2. As illustrated in FIG. 13, in the learning system 2, multiple clusters including clusters 91 and 92 are generated. The cluster 91 includes the three devices 20A to 20C in this example.

The learning instruction section 36E of the server 30 performs, for example, the processing illustrated in FIG. 11 to thereby determine one or more devices 20 that are to perform the machine learning processing (step S211). In this example, the learning instruction section 36E determines the three devices 20A to 20C constituting the cluster 91, as illustrated in FIG. 13, as the devices 20 to perform the machine learning processing.

Next, the learning instruction section 36E of the server 30 generates instruction information MSG (instruction information MSGA), and the communication unit 11 transmits the instruction information MSGA to the device 20A (step S212). Similarly, the learning instruction section 36E of the server 30 generates instruction information MSG (instruction information MSGB), and the communication unit 11 transmits the instruction information MSGB to the device 20B (step S213). Further, the learning instruction section 36E of the server 30 generates instruction information MSG (instruction information MSGC), and the communication unit 11 transmits the instruction information MSGC to the device 20C (step S214). The communication unit 21 of the device 20A receives the instruction information MSGA, the communication unit 21 of the device 20B receives the instruction information MSGB, and the communication unit 21 of the device 20C receives the instruction information MSGC.

Next, the learning processor 28A of the device 20A prepares learning data and a machine learning model M on the basis of the instruction information MSGA, and performs the machine learning processing on the basis of the learning data and the machine learning model M (step S215). Then, the learning processor 28A updates the machine learning model M on the basis of processing results of the machine learning processing to thereby generate a machine learning model MA Similarly, the learning processor 28A of the device 20B prepares learning data and a machine learning model M on the basis of the instruction information MSGB, and performs the machine learning processing on the basis of the learning data and the machine learning model M (step S216). Then, the learning processor 28A of the device 20B updates the machine learning model M on the basis of processing results of the machine learning processing to thereby generate a machine learning model MB Similarly, the learning processor 28A of the device 20C prepares learning data and a machine learning model M on the basis of the instruction information MSGC, and performs the machine learning processing on the basis of the learning data and the machine learning model M (step S217). Then, the learning processor 28A of the device 20C updates the machine learning model M on the basis of processing results of the machine learning processing to thereby generate a machine learning model MC.

Next, the communication unit 21 of the device 20A transmits the generated machine learning model MA to the server 30 (step S218). Similarly, the communication unit 21 of the device 20B transmits the generated machine learning model MB to the server 30 (step S219), and the communication unit 21 of the device 20C transmits the generated machine learning model MC to the server 30 (step S220). The communication unit 11 of the server 30 receives the machine learning models MA, MB, and MC.

Next, the learning instruction section 36E of the server 30 verifies whether or not the machine learning processing is successful on the basis of the machine learning models MA, MB, and MC, and in a case where the machine learning processing is successful, the learning instruction section 36E integrates the machine learning models MA, MB, and MC to thereby generate a machine learning model M (step S221).

Then, the communication unit 11 of the server 30 transmits the integrated machine learning model M generated in step S221 to all the devices 20 (the devices 20A to 20C) belonging to the cluster 91 (step S222). The communication units 21 of the devices 20A to 20C receive this machine learning model M.

This sequence thus ends.

In this example, the devices 20A to 20C generate the machine learning models MA to MC in steps S215 to S217, and transmit the generated machine learning models MA to MC to the server 30; however, this is non-limiting. Instead of this, similarly to the case of the first embodiment described above (FIG. 9), the devices 20A to 20C may transmit data under learning in the machine learning processing to the server 30. In this case, the server 30 may apply the data under learning transmitted from the devices 20A to 20C to, for example, a machine learning model M possessed by itself to thereby update the machine learning model M.

As described above, in the learning system 2, one or more devices 20 to perform the machine learning processing are determined by clustering the multiple devices 20 on the basis of the information about the locations of the devices 20 that is included in the device information database DBD. This makes it possible to perform the machine learning processing on the basis of the detection results that are obtained in substantially the same time frame by the sensors 27 of multiple devices 20 whose locations are close to each other. It is therefore possible to obtain a machine learning model M having high robustness and resistant to displacements of location and time of an event targeted for detection. That is, for example, in a case where machine learning processing is performed by multiple devices 20 separately on the basis of the detection results obtained by the sensors 27 of the devices 20, the machine learning model M obtained by each of the devices 20 can depend on the location of the device 20. In this case, in a case where a device 20 different from the device 20 that has generated the machine learning model M performs various computing processing using the machine learning model M, the computing accuracy can deteriorate. In contrast, in the learning system 2, because of clustering of the multiple devices 20, it is possible to perform machine learning processing on the basis of detection results obtained by the sensors 27 of multiple devices 20 whose locations are close to each other. Accordingly, in the learning system 2, it is possible to obtain a machine learning model M having high robustness. As a result, in the learning system 2, it is possible to enhance the computing accuracy in the case where various computing processing is performed using the machine learning model M.

As described above, in the present embodiment, one or more devices to perform machine learning processing are determined by clustering multiple devices on the basis of the information about the locations of the devices that is included in the device information database. This makes it possible to obtain a machine learning model having high robustness.

### <3. Third Embodiment

Next, a learning system 3 according to a third embodiment will be described. In the present embodiment, one or more devices to perform machine learning processing are determined on the basis of movement paths of the devices 20. It is to be noted that the components substantially the same as those of the learning system 1 according to the first embodiment described above are denoted by the same reference signs, and descriptions thereof are omitted as appropriate.

The learning system 3 includes a server 40, as illustrated in FIG. 1. The server 40 includes a processing unit 46, as illustrated in FIG. 2. The processing unit 46 includes a learning instruction section 46E. The learning instruction section 46E determines one or more devices 20 to perform the machine learning processing by obtaining the movement paths of the devices 20 on the basis of the information about the locations of the devices 20 that is included in the device information database DBD.

In the following, a description will be given of a case where the learning system 3 is applied to a system that monitors a road surface condition. In this system, the device 20 is installed in any of multiple vehicles running on the road. The multiple sensors 27 of the device 20 include, for example, a sensor that detects a pressure received from the road surface, a sensor that detects friction between a tire and the road surface, and the like. The device 20 performs machine learning processing on the basis of the results of detection by these sensors 27. It is to be noted that, aside from the above, the learning system 3 is also applicable to a system that detects a state of the atmosphere by installing the device 20 in a drone, for example.

The processing unit 28 of the device 20 generates sensor information INFS on the basis of the results of detection by the multiple sensors 27, and the communication unit 21 transmits the sensor information INFS to the server 40. The communication unit 11 of the server 40 receives the sensor information INFS, and the sensor information receiving section 16A of the processing unit 36 populates the sensor information database DBS with the sensor information INFS in association with the device identifier DV of the device 20 that has transmitted the sensor information INFS. In this manner, the sensor information database DBS of the server 40 is populated with the results of detection by the sensors 27 (the sensor information INFS) transmitted from the multiple devices 20.

Further, the processing unit 28 of the device 20 generates device information INFD including information about the contexts, computing resources, and the like of the device 20, and the communication unit 21 intermittently transmits the device information INFD to the servers 40. The device information INFD may include, for example, information about a destination or a transit point in addition to the information illustrated in FIG. 4. The communication unit 11 of the server 40 receives the device information INFD, and the device information receiving section 16B of the processing unit 46 populates the device information database DBD with the device information INFD in association with the device identifier DV of the device 20 that has transmitted the device information INFD. In this way, the device information database DBD of the server 40 is populated with the information about the context, computing resources, and the like (the device information INFD) transmitted from the multiple devices 20.

The output unit 13 of the server 40 displays, for example, the information about the pressure received from the road surface and the information about the friction between the tire and the road surface included in the sensor information database DBS, and the information about the contexts, computing resources, and the like included in the device information database DBD on the basis of a user operation accepted by the input unit 12 of the server 40.

For example, on the basis of instructions from the supervisor or in a case where a condition defined in the server 40 is satisfied, the server 40 gives instructions to cause one or more devices 20 out of the multiple devices 20 to perform machine learning processing. The learning instruction section 46E determines the one or more devices 20 to perform the machine learning processing by obtaining the movement paths of the devices 20 on the basis of the information about the locations of the devices 20 that is included in the device information database DBD. The learning instruction section 46E generates instruction information MSG instructing to perform the machine learning processing. As illustrated in FIG. 7, the instruction information MSG includes information about the learning data and information about the machine learning model M to be used. Then, the communication unit 11 transmits the instruction information MSG to the one or more devices 20 that are to perform the machine learning processing.

FIG. 14 illustrates an operation example of the learning instruction section 46E of the server 40.

First, the learning instruction section 46E references the sensor information database DBS and generates a list of the device identifiers DV (step S301).

Next, the learning instruction section 46E generates a path vector table TBL2 by calculating a path vector indicating changes in location of each of the devices 20 on the basis of the list of the device identifiers DV generated in step S301 and the device information database DBD (step S302).

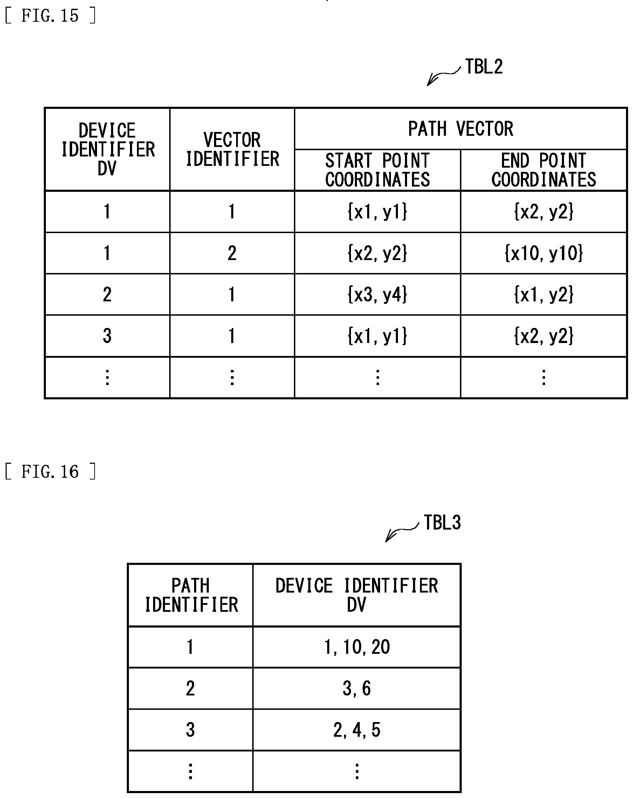

FIG. 15 illustrates an example of the path vector table TBL2. In the path vector table TBL2, the path vectors are associated with the device identifiers DV and vector identifiers. The path vectors each include information about start point coordinates and end point coordinates. The vector identifiers are codes for identifying multiple path vectors.

Next, the learning instruction section 46E generates a path overlap table TBL3 by identifying multiple devices 20 that have passed through a similar path on the basis of the multiple path vectors included in the path vector table TBL2 generated in step S302 (step S303). Specifically, the learning instruction section 46E calculates a distance D between the path vectors, and thereby checks whether or not the multiple devices 20 have passed through similar paths. For example, a Euclidean distance is usable as the distance D between the path vectors.

FIG. 16 illustrates an example of the path overlap table TBL3. In the path overlap table TBL3, the device identifiers DV of multiple devices 20 that have passed through similar paths are associated with path identifiers. The path identifiers are codes for identifying multiple paths.

The flow thus ends. As a result, all the devices 20 are each associated with any one of the multiple path identifiers.

On the basis of the results of detection by the sensors 27 of multiple devices 20 that are associated with the same path identifier, the server 40 causes those multiple devices 20 that are associated with the path identifier to perform machine learning processing. The server 40 determines respective learning data to be supplied to those multiple devices 20 that are associated with the path identifier, and transmits instruction information MSG to those multiple devices 20 that are associated with the path identifier. Operations subsequent thereto are similar to those in the case of the learning system 2 according to the second embodiment (FIG. 12).

As described above, according to the learning system 3, one or more devices 20 to perform the machine learning processing are determined by obtaining the movement paths of the devices 20 on the basis of the information about the locations of the devices 20 that is included in the device information database DBD. Accordingly, on the basis of detection results obtained by the sensors 27 of multiple devices 20 whose movement paths are substantially the same, it is possible to perform machine learning processing in relation to the path. This makes it possible to obtain a highly accurate machine learning model M in a short time. As a result, according to the learning system 3, it is possible to grasp the road surface condition and the like related to the movement path with higher accuracy by using the machine learning model M.

Further, according to the learning system 3, the device 20 is installed in a moving vehicle and the device 20 performs machine learning processing on the basis of instructions from the server 40, and therefore it is possible to perform distributed machine learning efficiently. That is, for example, according to a method of obtaining a machine learning model by performing machine learning processing on the basis of data accumulated in the entire system, the results of detection by the sensors 27 of the device 20 are accumulated as they are until the system starts the machine learning processing after the device 20 passes through a certain path. In contrast, according to the learning system 3, it is possible for the device 20 to perform the machine learning processing on the basis of the instructions from the server 40, and therefore it is possible for the device 20 to perform the machine learning processing in a timely manner. This makes it possible to perform distributed machine learning efficiently.

As described above, in the present embodiment, one or more devices to perform machine learning processing are determined by obtaining the movement paths of the devices on the basis of the information about the locations of the devices that is included in the device information database. This makes it possible to obtain a highly accurate machine learning model in a short time.

Although the present technology has been described above with reference to some embodiments, the present technology is not limited to these embodiments and the like, and may be modified in a variety of ways.

For example, in each of the embodiments described above, one or more devices 20 to perform the machine learning processing are determined on the basis of the information about the locations or the information about the computing resources, which is included in the device information INFD; however, this is non-limiting and it is possible to determine the one or more devices 20 on the basis of various information relating to the contexts of the devices 20 included in the device information INFD.

For example, the respective techniques of the embodiments may be combined with each other.

It is to be noted that the effects described in this specification are merely illustrative and non-limiting, and other effects may be provided.

It is to be noted that the present technology may have the following configurations. According to the present technology having the following configurations, it is possible to implement efficient learning processing.

(1) A server including:
   a storage unit that stores multiple pieces of device information that respectively correspond to multiple devices and supplied from the multiple devices;
   a processing unit that determines, on a basis of the multiple pieces of device information, one or more devices that are to perform learning processing, out of the multiple devices; and
   a communication unit that instructs the one or more devices to execute the learning processing.
(2) The server according to (1), in which
   each of the pieces of device information includes resource information indicating a resource of a corresponding one of the devices, and
   the processing unit determines the one or more devices on a basis of a computation amount in the learning processing, an amount of data that is a processing target of the learning processing, and the resource information about the multiple devices.
(3) The server according to (1) or (2), in which
   each of the pieces of device information includes location information indicating a location of a corresponding one of the devices, and
   the processing unit determines the one or more devices on a basis of the location information about the multiple devices.
(4) The server according to (3), in which the processing unit calculates a distance between the multiple devices on the basis of the location information about the multiple devices and determines the one or more devices on a basis of a result of calculation thereof.
(5) The server according to (3), in which the processing unit acquires a movement path of each of the devices on the basis of the location information about the multiple devices and determines the one or more devices on a basis of a result of acquisition thereof.
(6) The server according to any one of (1) to (5), in which the communication unit transmits data that is a processing target of the learning processing to the one or more devices.
(7) The server according to any one of (1) to (5), in which the communication unit further instructs the one or more devices to acquire data that is a processing target of the learning processing.
(8) The server according to (6) or (7), in which
   each of the multiple devices includes a sensor, and
   the data that is the processing target of the learning processing is a result of detection by the sensor of one or more of the multiple devices.
(9) The server according to any one of (1) to (8), in which
   the one or more devices include two or more devices,
   the communication unit receives learning model information that is obtained by the learning processing and transmitted from each of the two or more devices, and
   the processing unit integrates two or more pieces of the learning model information.
(10) The server according to (9), in which the communication unit transmits an integrated piece of the learning model information to a first device that is one of the multiple devices and is other than the two or more devices.
(11) The server according to (9), in which the communication unit transmits an integrated piece of the learning model information to the two or more devices.
(12) A learning system including:
   a server; and
   multiple devices, in which
   the server includes
      a storage unit that stores multiple pieces of device information that respectively correspond to the multiple devices and supplied from the multiple devices;
      a processing unit that determines, on a basis of the multiple pieces of device information, one or more devices that are to perform learning processing, out of the multiple devices; and
      a communication unit that instructs the one or more devices to execute the learning processing.
(13) The learning system according to (12), in which
   the one or more devices include two or more devices,
   the multiple devices except the two or more devices include a first device,
   each of the two or more devices generates learning model information by performing the learning processing and transmits the learning model information to the first device, and
   the first device integrates two or more pieces of the learning model information.
(14) The learning system according to (12), in which
   the one or more devices are a single second device,
   the multiple devices include a first device,
   the second device generates learning model information by performing the learning processing and transmits the learning model information to the first device.

This application claims priority from Japanese Patent Application No. 2019-004030 filed with the Japan Patent Office on January 15, 2019, the entire contents of which are incorporated herein by reference.

It should be understood by those skilled in the art that various modifications, combinations, sub-combinations, and alterations may occur depending on design requirements and other factors insofar as they are within the scope of the appended claims or the equivalents thereof.

## Claims

1. A server comprising:
a storage unit that stores multiple pieces of device information that respectively correspond to multiple devices, that are supplied respectively from the multiple devices, and that each include information about a corresponding one of the devices;
a processing unit that determines, on a basis of the multiple pieces of device information, one or more devices that are to perform learning processing, out of the multiple devices; and
a communication unit that instructs the one or more devices to execute the learning processing.

2. The server according to claim 1, wherein
each of the pieces of device information includes resource information indicating a resource of the corresponding one of the devices, and
the processing unit determines the one or more devices on a basis of a computation amount in the learning processing, an amount of data that is a processing target of the learning processing, and the resource information about the multiple devices.

3. The server according to claim 1, wherein
each of the pieces of device information includes location information indicating a location of the corresponding one of the devices, and
the processing unit determines the one or more devices on a basis of the location information about the multiple devices.

4. The server according to claim 3, wherein the processing unit calculates a distance between the multiple devices on the basis of the location information about the multiple devices and determines the one or more devices on a basis of a result of calculation thereof.

5. The server according to claim 3, wherein the processing unit acquires a movement path of each of the devices on the basis of the location information about the multiple devices and determines the one or more devices on a basis of a result of acquisition thereof.

6. The server according to claim 1, wherein the communication unit transmits data that is a processing target of the learning processing to the one or more devices.

7. The server according to claim 1, wherein the communication unit further instructs the one or more devices to acquire data that is a processing target of the learning processing.

8. The server according to claim 6, wherein
each of the multiple devices includes a sensor, and
the data that is the processing target of the learning processing is a result of detection by the sensor of one or more of the multiple devices.

9. The server according to claim 1, wherein
the one or more devices include two or more devices,
the communication unit receives learning model information that is obtained by the learning processing and transmitted from each of the two or more devices, and
the processing unit integrates two or more pieces of the learning model information.

10. The server according to claim 9, wherein the communication unit transmits an integrated piece of the learning model information to a first device that is one of the multiple devices and is other than the two or more devices.

11. The server according to claim 9, wherein the communication unit transmits an integrated piece of the learning model information to the two or more devices.

12. A learning system comprising:
a server; and
multiple devices, wherein
the server includes
a storage unit that stores multiple pieces of device information that respectively correspond to the multiple devices, that are supplied respectively from the multiple devices, and that each include information about a corresponding one of the devices;
a processing unit that determines, on a basis of the multiple pieces of device information, one or more devices that are to perform learning processing, out of the multiple devices; and
a communication unit that instructs the one or more devices to execute the learning processing.

13. The learning system according to claim 12, wherein
the one or more devices include two or more devices,
the multiple devices except the two or more devices include a first device,
each of the two or more devices generates learning model information by performing the learning processing and transmits the learning model information to the first device, and
the first device integrates two or more pieces of the learning model information.

14. The learning system according to claim 12, wherein
the one or more devices are a single second device,
the multiple devices include a first device,
the second device generates learning model information by performing the learning processing and transmits the learning model information to the first device.
